# EUROPEAN PATENT APPLICATION

(11) **EP 0 653 323 A1**
(43) Date of publication of application: **17.05.1995**
(21) Application number: 94500110.5
(22) Date of filing: 22.06.1994
(51) Int. Cl.: B60J 3/02, B60J 1/20

(54) **Electric windshield shade**

(30) Priority: 08.11.1993 ES 9302321
(71) Applicant: Somaza de Saint Palais, Angel, E-28230 Las Rozas (Madrid) (ES)
(72) Inventor: Somaza de Saint Palais, Angel, E-28230 Las Rozas (Madrid) (ES)

(57) **Abstract**

Purpose: its use is as a shade for the car while being driven and as a complete shade when the car is parked.

Description: it is a metallic sheet or plate inlaid in the car roof and it slides on grooves to cover the windshield working as a partial or total windshield shade.

Electric system: it has an engine, a relay, two electromagnets and two circuit breakers (fig.5).

Its uses: it has three different positions:
1^{a}) Shade rolled up or drawn in the car roof (fig.1).
2^{a}) Shade partially drawn down to avoid sun glare while driving (partial shade, fig.2).
3^{a}) Total shade to be used when the car is parked in the sun so that the sun rays do not heat the inside of the car (fig.3).

Alternative installation: in cars with a sliding roof, the shade is rolled tube-form like similar to a blind instead of being inlaid parallel to the roof. This tube would be placed on the roof by the windshield (fig.4).

## Description

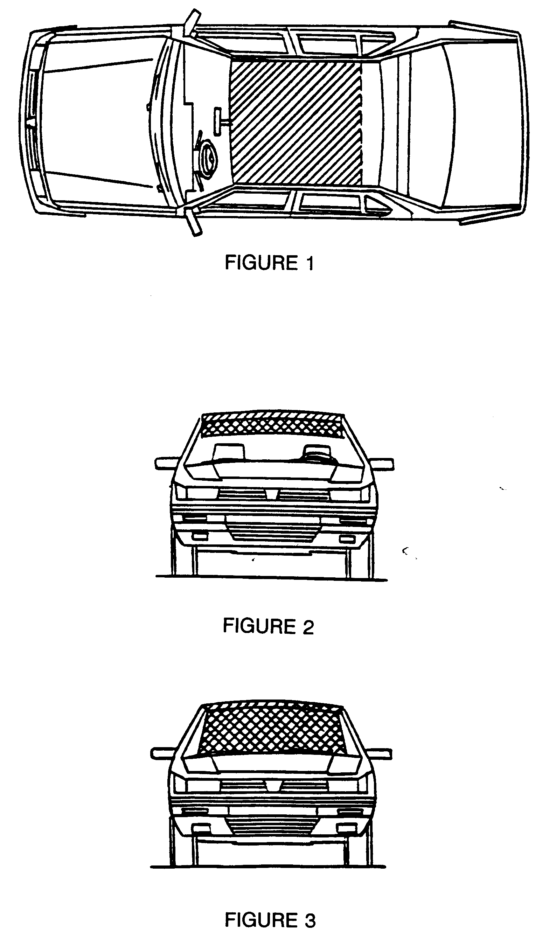

This is a device that is used as a partial shade, when the car is being driven to avoid the sun rays glaring the driver, as can be seen in fig.2. It replaces the common shades provided with all manufactured vehicles, thus being the electric shade the only one in the car.

The other use of the device is for parked cars so that the sun rays do not heat the inside of the car avoiding undesirable consequences-heating of the driving wheel and seats, damage of the dashboard, etc.. The corresponding switch should be pressed and the shade electrically winds down to the dashboard, so that the windshield is completely covered, as can be seen in fig.3.

It should be clearly understood that this complete shading function only takes place when the engine is stopped as it has a blocking device. Once the car is started if the shade were completely wound down, it would automatically wind up as soon as the key is introduced in the starter slot, thus avoiding any possible problems (fig.1). The metallic sheet or plate would be inlaid parallel to the roof along grooves with stop plates so that the sheet is out of sight.

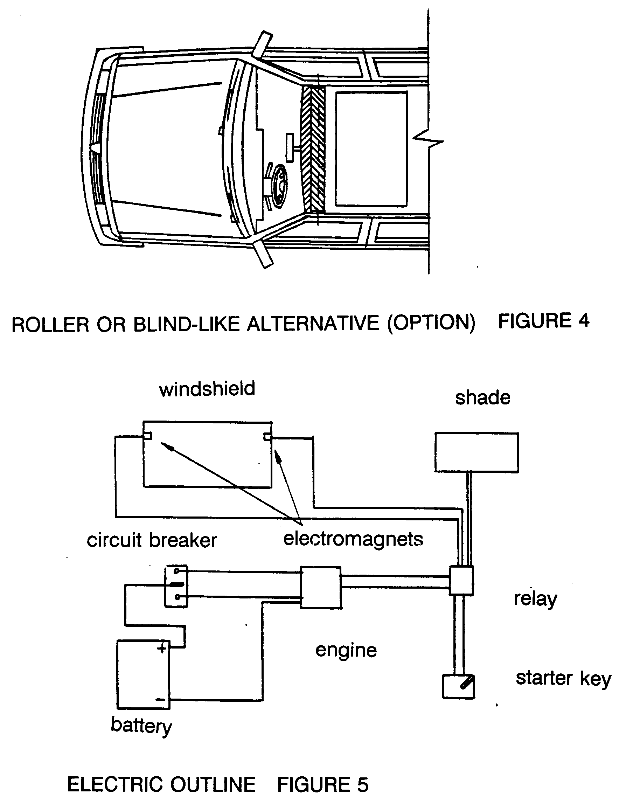

If it were used in a car with sliding roof, the sheet or plate would not be inlaid in the roof itself, but would be rolled on a roller blind-like fashion. The roller would be out of sight by the windshield without interfering with the sliding roof (fig.4).

This inside of the sheet or plate is the same as the car's upholstery, and the outside is painted the same color of the car, so it offers a uniform unit when the shade is completely drawn or wound down. A small mirror can be attached to it.

The electric system is formed by:
- Two circuit breakers, one for the partial position and the other for the complete or total position that would be placed on the dashboard with the other car switches.
- A revertible engine similar to the electric winding of windows with its corresponding knobs or pulls to draw it in the roof or the cover the windshield.
- A relay whose purpose is to draw inside the roof roll up the shade when it is in its total or complete position and the key is inserted in the starter.
- Two electromagnets that will set the stop plates for the partial shade position. These will stay activated while the key is inserted in the starter.

All these electric devices are connected to the car battery, as it can be seen in figure 5.

## Claims

It is regained as ownership the two-position electric shade as a new invention and its exclusive trade:
**1)** The two-position electric shade to be used when driving the car and when the car is parked. It is composed of a metallic sheet inlaid in the roof which slides along grooves covering totally or partially the windshield.
The electric system is formed by a revertible engine, a relay, two electromagnets and two circuit breakers.
It offers three possible position:
a) Shade rolled up or drawn into the car roof.
b) Shade partially drawn or wound down to avoid sun glare while driving (partial shade).
c) Shade completely drawn or wound down when the car is parked, thus avoiding the heating of the inside of the car.
**2)** In cars with a sliding roof the shade rolls up or down in a blind-like fashion.The roller is placed on the roof by the windshield.
